# EUROPEAN PATENT APPLICATION

(11) **EP 4 810 269 A1**
(43) Date of publication of application: **23.09.2026**
(21) Application number: 26162243.5
(22) Date of filing: 04.03.2026
(51) Int. Cl.: B60C 13/00, B29D 30/06

(54) **TIRE AND TIRE MOLDING DIE**

(30) Priority: 21.03.2025 JP 2025046331
(71) Applicant: Toyo Tire Corporation, Itami-shi, Hyogo 664-0847 (JP)
(72) Inventor: SHINOZAKI, Shingo, Itami-shi, Hyogo, 664-0847 (JP)
(74) Representative: Müller-Boré & Partner Patentanwälte PartG mbB

(57) **Abstract**

To provide a tire having favorable moldability, having higher black density than conventional and can achieve enhanced contrast, and having high durability in the pattern region, as well as a tire molding die for molding this tire. A pattern region 7 includes a plurality of projections 110, each of the plurality of projections 110 includes: an outside wall 111; an apex portion 112; and a recess portion 113, in which, when a point where virtual outside wall lines VL that respectively extend linearly two wall surfaces of the outside wall 111 virtually intersect is defined as a virtual intersection point VP, a height from the reference plane 7a to the virtual intersection point VP is defined as H0, and a height from the apex portion 112 to the virtual intersection point VP is defined as Hk, a relationship of 0.3 ≤ (Hk/H0) ≤ 0.6 is satisfied.

## Description

This application is based on and claims the benefit of priority from Japanese Patent Application No. 2025-046331, filed on 21 March 2025, the content of which is incorporated herein by reference.

### BACKGROUND OF THE INVENTION

### Field of the Invention

The present disclosure relates to a tire and a tire molding die.

### Related Art

There is a known tire having, on a part of a sidewall, a pattern region in which a large number of fine projections are aggregated (for example, Japanese Unexamined Patent Application, Publication No. 2020-131904). Such a pattern region, in which incident light is repeatedly reflected between the projections, has a light absorption effect, and consequently, the pattern region is visually recognized to be blacker than the outer surface of the sidewall around the pattern region, whereby the contrast is enhanced. Provision of this type of pattern region contributes to improving the design effect and appearance of the tire.

Patent Document 1: Japanese Unexamined Patent Application, Publication No. 2020-131904

### SUMMARY OF THE INVENTION

With the tire disclosed in Patent Document 1, fine projections are arranged within a lattice portion surrounded by rib-shaped projection portion, and thus the structure is complex, and the difficulty in manufacturing is high. For this reason, there is concern over not being molded into the desired shape, and concern over the appearance becoming worse instead.

In addition, in the case of establishing a form not provided with the rib-shaped projection portion, there is a limitation in the effect of making appear black, and a configuration that makes appear even more black is desired. For example, so long as the height of the fine projections can be further raised, it is considered possible to further enhance the effect of making appear black.

However, if the height of the projections becomes higher, a strength decline of the projection is of concern. There has been concern if the strength of projections declines that part of the projection will deform or go missing, in the case of the tire deforming due to traveling, a case of external force being applied, etc. If a part of the projection deforms or goes missing, there is concern over the external appearance becoming worse instead.

An object of the present disclosure is to provide a tire having favorable moldability, capable of achieving enhanced contrast by the black density being higher than conventional, and having high durability in the pattern area, as well as a tire molding die for molding this tire.

A tire of the present disclosure includes: a pattern region provided to at least part of an outer surface of a sidewall in a visually recognizable state as a different site than a surrounding of said part, in which the pattern region includes a plurality of projections that project from a reference plane, each of the plurality of projections includes, in a cross-sectional shape, an outside wall that rises up from the reference plane sloping towards an inner side of the projection; an apex portion of the projection; and a recess portion that indents from the apex portion towards a side of the reference plane at a center of the projection, in which, when a point where virtual outside wall lines that respectively extend linearly two wall surfaces of the outside wall that are on both sides of the recess portion interposing the recess portion virtually past the apex portion intersect is defined as a virtual intersection point, a height from the reference plane to the virtual intersection point is defined as H0, and a height from the apex portion to the virtual intersection point is defined as Hk, a relationship of 0.3 ≤ (Hk/HO) ≤ 0.6 is satisfied.

The tire molding die of the present disclosure is a tire molding die for molding the above-mentioned tire, and includes a projection forming portion including a plurality of recess portions corresponding to the plurality of projections.

According to the present disclosure, it is possible to provide a tire having favorable moldability, capable of achieving enhanced contrast by the black density being higher than conventional, and having high durability in the pattern area, as well as a tire molding die for molding this tire.

### BRIEF DESCRIPTION OF THE DRAWINGS

FIG. 1 is a side view for a tire 1 according to a first embodiment when viewed from a direction of a tire rotation axis line X;
FIG. 2 is a view showing an example of a tire molding die for vulcanizing and molding the tire 1 of the first embodiment;
FIG. 3 is a perspective view showing a plurality of projections 110 arranged in a pattern region 7;
FIG. 4 is a view along the arrow T in FIG. 3, which is a plan view showing the plurality of projections 110 arranged in the pattern region 7;
FIG. 5 is a cross-sectional view sectioning the plurality of projections 110 arranged in the pattern region 7 at a position along the arrows A-A in FIG. 4; and
FIG. 6 is a table summarizing the evaluation results.

### DETAILED DESCRIPTION OF THE INVENTION

Hereinafter, aspects for implementing the present disclosure will be described by referencing the drawings, etc.

### (First Embodiment)

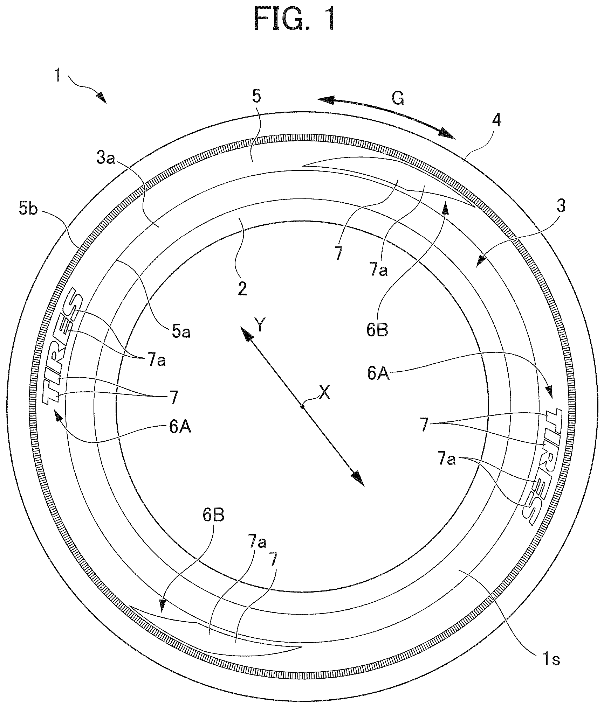

FIG. 1 is a side view of a tire 1 according to a first embodiment when viewing from a direction along the tire rotation axis line X. The tire 1 of the present embodiment is a so-called pneumatic tire in which a predetermined air pressure is filled in the inner cavity thereof. The tire 1 of the embodiment is a pneumatic tire for passenger vehicles including light duty vehicles, SUVs, etc. It should be noted that the configuration of the tire 1 according to the embodiment can also be applied to pneumatic tires for other vehicle types such as light trucks, trucks and buses, for example. In addition, the configuration of the present disclosure is similarly applicable even for non-pneumatic tires.

First, an outline of a configuration mainly related to a lateral surface of the tire 1 will be described by referencing FIG. 1. It should be noted that a tire axial direction, tire circumferential direction and tire radial direction referenced in the following description are as follows. Tire axial direction is the extending direction of a tire rotation axis line X, and is referenced as a paper plane front/back direction in FIG. 1. In addition, since the tire axial direction when viewing from the tire radial direction is the left/right direction, the tire axial direction may be referred to as left/right direction. Tire circumferential direction is a circular arc centered around the tire rotation axis line X, is a direction along the rotation direction of the tire 1, and is indicated by the arrow G in FIG. 1. Tire radial direction is a direction perpendicular to the tire rotation axis line X, and is arbitrarily indicated by the arrow Y in FIG. 1.

As illustrated in FIG. 1, the tire 1 includes beads 2, sidewalls 3 that continue from the beads 2 and extend outward in the tire radial direction away from the tire rotation axis line X, and a tread 4. One bead 2 and one sidewall 3 are provided on one side 1s of tire 1 illustrated in FIG. 1, and one bead 2 and one sidewall 3 are provided on the other side of the tire 1 spaced apart in the tire axial direction from the side 1s and not illustrated in FIG. 1. That is, the tire 1 includes the left and right beads 2 in pairs and the left and right sidewalls 3 in pairs. The tread 4 is disposed between the outer sides in the tire radial direction of the left and right sidewalls 3. The outer peripheral surface of the tread 4 includes a tread surface that contacts with a road surface.

The tire 1 is mainly composed of a plurality of types of rubbers respectively constituting the beads 2, the sidewalls 3, and the tread 4. A carcass ply that constitutes the skeleton of the tire 1 is disposed on an inner cavity-facing side of the rubber constituting the entire tire 1, and an inner liner that maintains an air pressure is disposed on an inner cavity-facing side of the carcass ply. An annular reinforcing belt is embedded in the rubber constituting the tread 4. The carcass ply, the inner liner, and the reinforcing belt are not illustrated. In addition to the foregoing components, various components are included as necessary in consideration of the function of the tire 1.

As illustrated in FIG. 1, the sidewall 3 has an outer surface 3a and an annular decorative region 5 extending on the outer surface 3a over the entire circumference in the tire circumferential direction. The decorative region 5 has a constant width and is defined between an inner arc line 5a and an outer arc line 5b. The inner arc line 5a is located inward in the tire radial direction and close to the tire rotation axis line X in the tire radial direction, and the outer arc line 5b is located outward in the tire radial direction with respect to the inner arc line 5a. Each of the inner arc line 5a and the outer arc line 5b may be a line formed as a concavity, a convexity, or a step on the outer surface 3a of the sidewall 3, or may be a virtual line that does not actually exist.

The tire 1 includes pattern regions 7 on parts of the outer surface 3a of the sidewall 3. Each pattern region 7 is visually recognizable as being different from the perimeter of the part where the pattern region 7 is provided. Each pattern region 7 is provided on a sidewall rubber that is a black rubber member constituting the outer surface of the sidewall 3.

As illustrated in FIG. 1, mark portions 6A are provided on the annular decorative region 5 at two positions opposite to each other across the tire rotation axis line X. Each mark portion 6A includes a plurality of characters arranged in the tire circumferential direction. By means of the plurality of characters, at least one of a manufacturer name, a product name, a brand mark, or the like is displayed. Each character may be bordered with a concave or convex line, or the entirety of each character may be formed of a concavity or convexity. For example, the characters of the mark portions 6A are provided as the pattern regions 7 of the embodiment.

As illustrated in FIG. 1, motif portions 6B are provided on the annular decorative region 5 at two positions each of which is sandwiched between the two mark portions 6A in the circumferential direction. Each motif portion 6B includes a motif like a parallelogram curved along the annular decorative region 5. For example, the motifs of the motif portions 6B are also provided as the pattern regions 7 of the embodiment.

It should be noted that the shapes of the pattern regions 7 are not limited to the foregoing shapes, and various shapes may be adopted, examples of which include an arbitrary shape, shapes delineating the above-mentioned manufacturer name, product name, brand mark, etc., and shapes delineating other numerals, characters, etc.

Each of the above-mentioned respective pattern regions 7 in the first embodiment has a reference plane 7a along a profile of the sidewall 3. On this reference plane 7a, a plurality of projections 110 described later are formed. The pattern region 7, by a plurality of projections 110 being formed therein, is a region provided in a visually recognizable state as a different site than the surroundings of the pattern region 7. It should be noted that the reference plane 7a may overhang from the profile of the sidewall 3 to the outer side in the tire axial direction, may indent from the profile of the sidewall 3 to the inner side in the tire axial direction, or may be a surface at the same position in the tire axial direction as the profile of the sidewall 3.

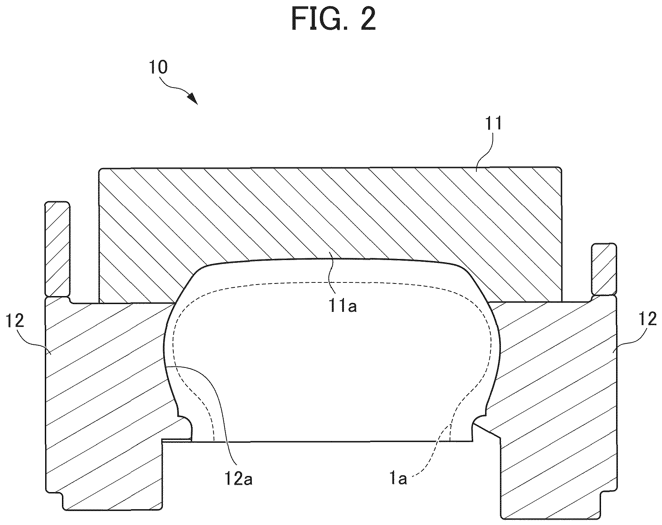

FIG. 2 is a view showing an example of a tire molding die for vulcanizing and molding the tire 1 according to the first embodiment. FIG. 2 is a meridian line cross-sectional view along the axial direction of the tire 1 molded in such a tire molding die 10.

The tire molding die 10 illustrated in FIG. 2 includes a plurality of sectors 11 arranged circumferentially along the outer circumference of the tire 1, a pair of side plates 12 disposed at both axial sides of an annular body formed by the plurality of sectors 11 combined with each other, and a pair of bead rings (not shown). At the time of vulcanization molding, an unvulcanized tire 1a to be molded into the tire 1 is set inside the tire molding die 10, as indicated by the broken line in FIG. 2. The assembly of the sectors 11, the side plates 12, and the bead rings constitutes the mold for molding the tire 1, and the entire outer surface of the tire 1 is molded by the inner surface of the mold, namely, the inner surfaces 11a of the sectors 11, the inner surfaces 12a of the side plates 12, and the inner surfaces of the bead rings. During vulcanization molding, a bladder (not shown) that presses the unvulcanized tire 1a against the inner surface of the tire molding die 10 is disposed inside the unvulcanized tire 1a. The plurality of sectors 11 mainly play a role in forming the tread 4, and the pair of side plates 12 mainly play a role in forming the sidewalls 3. The pair of bead rings play a role in forming the beads 2, and the bladder plays a role in forming the entire inner surface of the tire 1.

An unvulcanized tire 1a is vulcanized whereby the rubber shape of the tire 1 overall is formed by the tire molding die 10, and the plurality of projections 110 described next are formed in the aforementioned pattern region 7. The inner surface 12a of a side plate 12 includes a projection forming portion (not shown) including a plurality of recess portions corresponding to the projections 110.

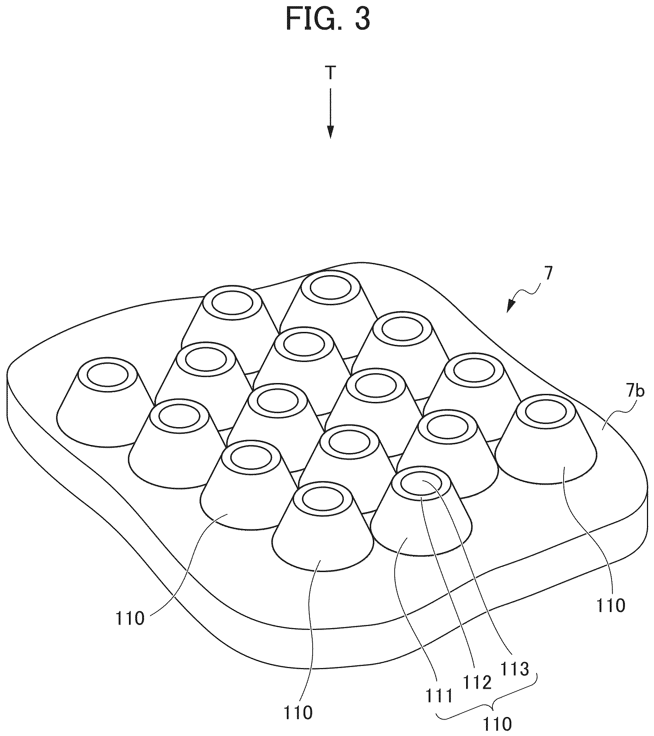

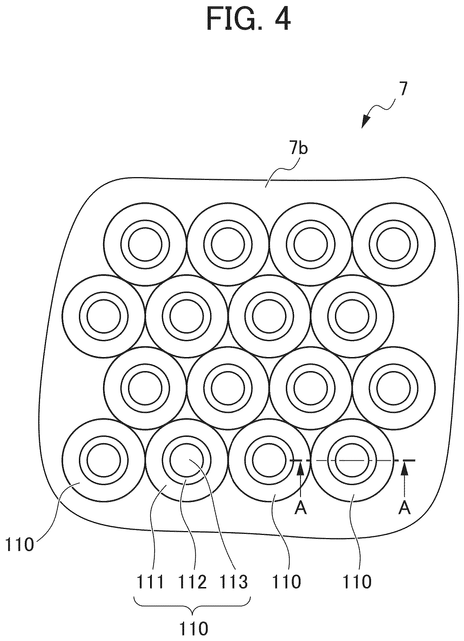

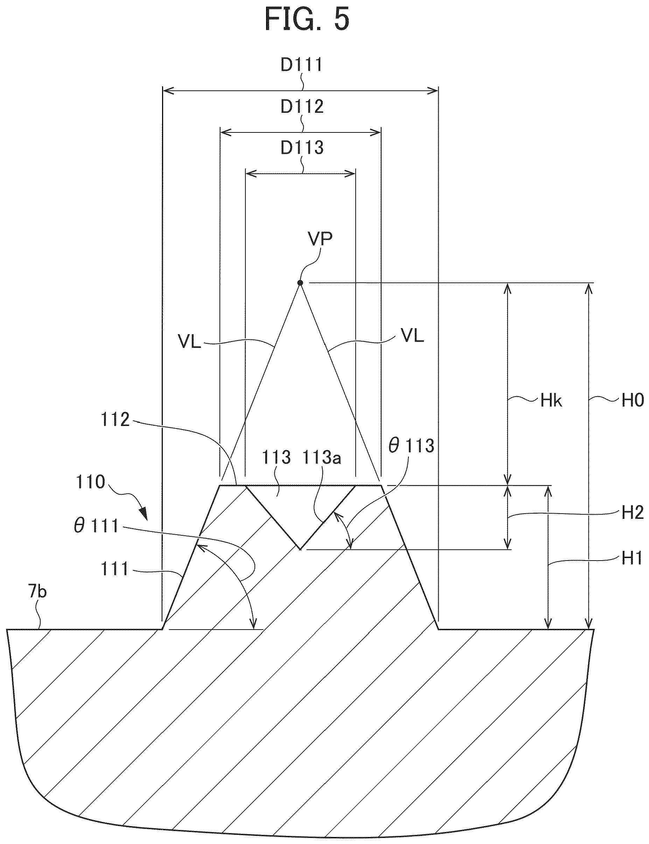

FIG. 3 is a perspective view illustrating the plurality of projections 110 arranged in the pattern region 7. FIG. 4 is a plan view illustrating the plurality of projections 110 arranged in the pattern region 7, as viewed along the arrow T in FIG. 3. FIG. 5 is a cross-sectional view of one of the plurality of projections 110 arranged in the pattern region 7, taken along the line indicated by the arrows A in FIG. 4. While the plurality of projections 110 are arranged in, and project from, the reference plane 7a of the pattern region 7, FIGS. 3 to 5 illustrate a state in which the plurality of projections 110 are arranged on, and project from, a UV unwrapping reference plane 7b that results from UV unwrapping the reference plane 7a of the pattern region 7. FIG. 5 illustrate only one projection 110 in a cross section. The UV unwrapping reference plane 7b is a surface resulting from twodimensionally unwrapping the three-dimensional outer surface 3a of the sidewall 3.

A plurality of the projections 110, which protrude from the reference plane 7a substantially toward the outer side in the tire axial direction, are arranged. The projections 110 of the present embodiment are arranged regularly in multiple columns, as shown in FIG. 4. Specifically, in one column, the projections 110 are arranged closely at equal intervals (equal pitch), and make a close-packed arrangement in which the relative positions between two adjacent columns are shifted by half pitch. It should be noted that the arrangement of the projections 110 is not limited to a close-packed arrangement and, for example, may be arranged with a predetermined interval therebetween without contacting, or may be a random arrangement in an area that can maintain a predetermined arrangement density. Each projection 110 includes an outside wall 111, an apex portion 112 and a recess portion 113.

It should be noted that, in the following description, a base of the projection 110 indicates a part where the projection 110 rises up from a UV development reference plane 7b (or reference plane 7a), and indicates a lower end portion of the projection 110 in FIG. 5. In addition, tip end of the projection 110 indicates a side distanced from the UV development reference plane 7b (or reference plane 7a), and indicates the end portion on the upper side of FIG. 5. In addition, the inner side of the projection 110 indicates the direction towards the inner side of the projection 110 in the plan view shown in FIG. 4, and in a cross section through the center of the projection 110 shown in FIG. 5, is synonymous with a central side of the projection 110, and does not indicate inside the recess portion 113, an inner surface of the recess portion 113, etc.

The outside wall 111 forms the outer circumference of the projection 110. The outside wall 111 rises up from the reference plane 7a (UV development reference plane 7b) sloping towards the inner side of the projection 110. The outside wall 111 in the present embodiment indicates a conical outer surface, and the sloped surface on the outside thereof rises up sloping towards the inner side of the projection 110, in a cross section (FIG. 5) passing through the center of the projection 110. It should be noted that the outside wall 111 is not limited to a conical shape and may be, for example, a pyramid shape, or an elliptical conical shape. Herein, in the cross section of FIG. 5, the angle at which the outer surface of the outside wall 111 rises up, i.e., angle formed by the UV development reference plane 7b (or reference plane 7a) and the outside wall 111 shown in FIG. 5, is defined as θ111. The angle θ111 is desirably 50° or more and 80° or less. By the angle θ111 being in the above-mentioned angle range, the effect of dispersing light reaching the projection 110 improves, and it is possible to enhance the effect of making appear black. In addition, by the angle θ111 being in the above-mentioned angle range, the projection 110 can link to the reference plane 7a with sufficient surface area as a widening stable shape, and thus can enhance the strength of the projection 110, and enhance durability. In addition, due to the projection 110 being a widening shape, the rubber can flow into the tire molding die appropriately during molding, and thus can make for favorable moldability.

The apex portion 112 is provided to the tip end of the outside wall 111, and constitutes the most tip end of the projection 110. The apex portion 112 in the present embodiment is a flat surface that is substantially parallel to the reference plane 7a. It should be noted that the shape of the apex portion 112 is not limited to a flat surface and, for example, may be a curved shape, circular arc shape, or the like in the cross section passing through the center of the projection 110 (FIG. 5). In this case, the apex portion 112 may be configured so as to smoothly link with at least one of the outside wall 111 and the recess portion 113. By the apex portion 112 smoothly linking with at least one of the outside wall 111 and the recess portion 113, it is possible to diffuse light reaching near the apex portion 112, and cause the pattern region 7 to appear more black.

The recess portion 113 is positioned at the center of the projection 110 when viewing the projection 110 from above (orientation of the arrow T in FIG. 3), and is a concave shape recessed from the apex portion 112 towards the reference plane 7a (UV development reference plane 7b) side. The recess portion 113 in the embodiment makes a cross sectional shape recessed in a substantially V shape from the apex portion 112 towards the reference plane 7a. In other words, the recess portion 113 has a substantially V-shaped cross-sectional shape from an opening side of the recess portion 113 towards the reference plane 7a, and makes a concave shape having an inside wall 113a of substantially inverted conical shape. In addition, the bottom portion of the recess portion 113 is a pointed shape which is the apex of a substantially inverted conical shape. It should be noted that the bottom portion of the recess portion 113 may be formed in a slightly curved surface formed in an in-plane shape of a substantially hemispherical shape, for example. The inside wall 113a of the recess portion 113 rises up, sloping from the bottom portion of the recess portion 113 towards the outer side of the projection 110. The inside wall 113a desirably slopes at an angle of 50° or more and 80° or less relative to the reference plane 7a. In other words, the angle θ113 shown in FIG. 5 is desirably 50° or more and 80° or less. By the inside wall 113a sloping at an angle of 50° or more and 80° or less relative to the reference plane 7a, it is possible to diffuse the light reaching the inside wall 113a, and thus the pattern region 7 can be made to appear more black.

By providing the recess portion 113 to the apex portion 112, the light reflected at the flat end face of the apex portion 112 is reduced, and for the light reaching inside the recess portion 113, it is possible to absorb most of it by repeatedly reflecting within the recess portion 113. Consequently, by providing the recess portion 113, it is possible to enhance the effect of the pattern region 7 making appear black.

The projections 110 of the present embodiment absorb most of the light reaching the pattern region 7 due to the above-mentioned shape, by repeatedly reflecting between the projections 110 and within the recess portions 113. By this light absorption action, the pattern region 7 of the tire 1 can exhibit an effect of making appear more black compared to other regions. In order to enhance the light absorption effect, it is considered more desirable to increase the height of the projections 110. On the other hand, a decline in the durability of the projections 110 occurs as increasing the height of the projections 110. Therefore, the height of the projections 110 is important. The height of the projections 110 must be made a height capable of achieving both durability in the projection, and the effect of making appear black.

Herein, the projections 110 of the present embodiment each include the outside wall 111 for which the outer surface of the outside wall 111 rises up at the angle θ111 as mentioned above; therefore, contrary to a case of a substantial column being provided in the projection form, for example, it is not possible to evaluate the appropriate height of the projection 110 by simply a pure height dimension. Therefore, in the present embodiment, as a parameter which can comprehensively evaluate the slope of the outside wall 111 and the height of the projection 110, a ratio R described below is introduced, and by setting the ratio R to the appropriate value, a projection 110 which can achieve both durability of the projection and the effect of making appear black is determined.

In the cross section passing through the center of the projection 110 (FIG. 5), a point where virtual outside wall lines VL virtually intersect, which are extending two wall surfaces of the outside wall 111 that are on both sides of the recess portion 113 interposing the recess portion 113, linearly past the apex portion 112 is defined as a virtual intersection point VP. In addition, the height from the reference plane 7a (UV development reference plane 7b) to the virtual intersection point VP is defined as H0. Furthermore, when defining a height from the apex portion 112 to the virtual intersection point VP as Hk, the ratio R is (Hk/H0). As this ratio R becomes smaller, the height of the projection 110 becomes higher, and the effect of making appear black improves; however, the durability of the projection 110 is considered to decline. On the other hand, as this ratio R becomes larger, the height of the projection 110 becomes lower, and the durability of the projection improves; however, the effect of making appear black is considered to decline.

Herein, in order to obtain the virtual intersection point VP, it is necessary for the virtual outside wall line VL extending the wall surface of the outside wall 111 virtually past the apex portion 112 to be appropriately determined. In FIG. 5, the wall surface of the outside wall 111 is linear in the cross-sectional shape, and thus the virtual outside wall line VL can be determined unambiguously. However, the tire 1 is manufactured by molding rubber using the tire molding die 10. For this reason, the wall surface of the outside wall 111 in a cross section is not limited to a linear form, and a curved shape is also expected. In this case, there is concern of not being able to unambiguously determine the virtual outside wall lines VL.

Therefore, in order to make the virtual outside wall lines VL determinable unambiguously, a linear line segment passing through two separated locations on the wall surface of the outside wall 111 in the cross section is determined, and a virtual line segment virtually extending this line segment linearly is defined as a virtual outside wall line VL. More specifically, in the cross-sectional shape, a virtual line segment virtually extending linearly a line segment establishing two separated points on the wall surface of the outside wall 111 as waypoints is defined as the virtual outside wall line VL.

One of the waypoints is a point at which the reference plane 7a and the surface wall of the outside wall 111 intersect in a cross section passing through the center of the projection 110. It should be noted that, in the case of a portion where the reference plane 7a and the wall surface of the outside wall 111 intersect being rounded, the portion having this roundness point is ignored, and extending the reference plane 7a and the outside wall 111, the point where both intersect is defined as one waypoint. Therefore, the virtual intersection point VP is determined by the virtual outside wall lines VL set so as to pass through a positions of a base where the projection 110 rises up from the reference plane 7a, in a cross section passing through the center of the projection 110.

The second waypoint is a wall surface of the outside wall 111 at a position half the height of the height H1 from the reference plane 7a to the apex portion 112 in the cross section passing through the center of the projection 110. Therefore, when defining the height from the reference plane 7a to the apex portion 112 as H1, the virtual intersection point VP is determined by the virtual outside wall lines VL set so as to pass through the outside wall 111 at a position with the height from the reference plane 7a of 0.5xH1, on the cross section passing through the center of the projection 110.

To determine the appropriate range of the ratio R = (Hk/H0), a plurality of types of projections 110 were prototyped, and the effect of making appear black and the durability were evaluated. For the projection 110, test pieces were prepared with common diameter D111 at the base of the outside wall 111 = 1.1 mm, and angle θ111 = 60°, and the ratio R = (Hk/HO) was varied by 0.1 increments. The blackness was evaluated with a sensory evaluation by visual inspection. In addition, the durability was evaluated by the presence/absence of damage by observing under magnification by a loupe after applying an external force (external force of scratching by spatula) to the projection 110.

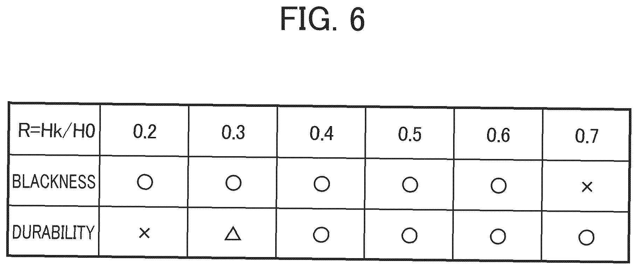

FIG. 6 is a table summarizing the evaluation results. In the table of FIG. 6, "o" (circle) indicates being a favorable state, "x" (cross) indicates being an unusable state, and "Δ" (triangle), although being worse than the result of "o" (circle), indicates an usable state. In the item of "blackness", although reflections of the apex portion 112 are visible if the ratio R is 0.6 or less, it was observed as sufficiently black, and thus was the favorable evaluation result of "o" (circle); however, with the ratio R of 0.7, the blackness was observed to be clearly inferior to other ratios, and thus evaluated as "x" (cross). In addition, in the item of "durability", with the ratio R of 0.2, large damage was seen in the projections 110, and thus was an unusable result. In addition, with the ratio R of 0.3, although large damage was not seen in the projections 110, since deformation or cracks were observed partly, "durability" was the evaluation result of "Δ" (triangle). If the ratio R is 0.4 or more, damage could not be confirmed, and the "durability" was evaluated as "o" (circle).

From the above evaluation results, it is desired for the ratio R to be 0.3 or more and 0.6 or less. In other words, it is desirable to satisfy the relationship of 0.3 ≤ (Hk/HO) ≤t 0.6.

In addition, the ratio R is more desirably 0.4 or more and 0.6 or less. In other words, it is more desirable to satisfy the relationship of 0.4 ≤ (Hk/HO) ≤ 0.6.

As mentioned above, by setting the ratio R to the above-mentioned suitable range, the effect of making appear black improves, and it is possible to establish projections 110 with favorable durability. In addition to this, by setting the dimension of other portions of the projection 110 to more specific ranges shown below, more superior effects can be exhibited.

The apex portion 112 is desirably positioned at a height 0.6 mm or more and 1.4 mm or less from the reference plane 7a. In other words, the height H1 from the reference plane 7a to the apex portion 112 shown in FIG. 5 desirably satisfies the relationship of 0.6 mm ≤ H1 ≤ 1.4 mm. It is thereby possible to achieve both blackness and durability. In addition, the depth from the apex portion 112 to the bottom portion of the recess portion 113, i.e. depth H2 of the recess portion 113, is desirably 0.2 mm or more and 1.0 mm or less. By setting the depth H2 of the recess portion 113 to the above-mentioned range, it is possible to achieve both blackness and durability.

In addition, when viewing the projection 110 from the normal direction of the reference plane 7a, the projection 110 desirably has an area-equivalent circle diameter of the shape of the projection 110 in the reference plane 7a of 0.6 mm or more and 1.5 mm or less. Herein, area-equivalent circle diameter is the diameter of a circle equal to the area of the shape of the projection 110 on the reference plane 7a. In the present embodiment, since the outside wall 111 is formed in a conical shape, the area-equivalent circle diameter of the shape of the projection 110 on the reference plane 7a matches the diameter D111 shown in FIG. 5. It should be noted that, in the case of the outside wall of the projection, for example, making a pyramid shape, it is the diameter of a circle having the same area as the area of the bottom portion of the pyramid shape, which is the shape of the projection 110 on the reference plane 7a. By the area-equivalent circle diameter of the shape of the projection 110 on the reference plane 7a being 0.6 mm or more and 1.5 mm or less, it is possible to enhance the durability of the projection 110 in the case of an external force such that scratches the projection 110 being applied. In addition, it is possible to suppress the effect of making appear black from decreasing by the projection 110 becoming too large.

In addition, when viewing the projections 110 from the normal direction of the reference plane 7a, the opening area of each recess portion 113 is desirably 15% or more and 70% or less of the area of the shape of the projection 110 on the reference plane 7a. By the opening area of the recess portion 113 being 15% or more and 70% or less of the area of the shape of the projection 110 on the reference plane 7a, even in the case of dirt or the like accumulating inside the recess portion 113, it is possible to easily remove the dirt and the like.

In addition, when defining the diameter of the apex portion 112 as D112, D112 is desirably 0.5 mm or more and 1.0 mm or less. By setting the diameter of D112 to the above-mentioned range, it is possible to achieve both blackness and durability. Furthermore, when defining the diameter of the recess portion 113 as D113, D113 is desirably 0.3 mm or more and 0.8 mm or less. By setting the diameter of D113 to the above-mentioned range, it is possible to easily remove dirt and the like.

As described above, according to the tire 1 of the present embodiment, since the height of the projections 110 provided in the pattern region 7 are set to the appropriate height, the balance between the strength of the projection 110 and the effect of making appear black becomes favorable. Consequently, it is possible to provide the tire 1 having favorable moldability, higher black density than conventional, and thus can achieve enhanced contrast, and which has high durability of the pattern region 7.

The following effects are exerted by the tire 1 according to the aforementioned embodiment.
(1) The tire 1 according to the present embodiment includes a pattern region 7 provided to at least part of an outer surface of a sidewall 3 in a visually recognizable state as a different site than a surrounding of said part, in which the pattern region 7 includes a plurality of projections 110 that project from a reference plane 7a, each of the plurality of projections 110 includes, in a cross-sectional shape, an outside wall 111 that rises up from the reference plane 7a sloping towards an inner side of the projection 110; an apex portion 112 of the projection 110; and a recess portion 113 that indents from the apex portion 112 towards a side of the reference plane 7a at a center of the projection 110, in which when a point where virtual outside wall lines VL that respectively extend linearly two wall surfaces of the outside wall 111 that are on both sides of the recess portion 113 interposing the recess portion 113 virtually past the apex portion 112 intersect is defined as a virtual intersection point VP, a height from the reference plane 7a to the virtual intersection point VP is defined as H0, and a height from the apex portion 112 to the virtual intersection point VP is defined as Hk, a relationship of 0.3 ≤ (Hk/HO) ≤ 0.6 is satisfied.
   It is thereby possible to provide a tire having favorable moldability, having higher black density than conventional, and thus can achieve enhanced contrast, and which has high durability of the pattern region.
(2) In the tire 1 as described in (1), the apex portion 112 is positioned at a height 0.6 mm or more and 1.4 mm or less from the reference plane 7a.
   It is thereby possible to achieve both blackness and durability.
(3) In the tire 1 as described in (1) or (2), the outside wall 111 rises up from the reference plane 7a at an angle of 50° or more and 80° or less.
   The effect of diffusing light reaching the projections 110 improves, and thus it is possible to enhance the effect of making appear black. In addition, it is possible for the projections 110 to connect with sufficient area to the reference plane 7a as a widening stable shape, thereby enhancing the strength of the projections 110, which can improve the durability. In addition, due to the projection 110 being a widening shape, rubber can appropriately flow into the tire molding die during molding, and thus can make for favorable moldability.
(4) In the tire 1 as described in any one of (1) to (3), each of the plurality of projections 110 has an area-equivalent circle diameter of a shape of the projection 110 in the reference plane 7a of 0.6 mm or more and 1.5 mm or less when viewing the projection 110 from a normal direction of the reference plane 7a.
   It is thereby possible to enhance the durability of the projections 110 when an external force such that scratches the projections 110 is applied. In addition, it is possible to suppress the projections 110 from becoming excessively large, and the effect of making appear black decreasing.
(5) In the tire 1 as described in any one of (1) to (4), the apex portion 112 smoothly connects with at least one among the outside wall 111 and the recess portion 113.
   It is thereby possible to diffuse the light reaching near the apex portion 112, and thus make the pattern region 7 appear blacker.
(6) In the tire 1 as described in any one of (1) to (5), each of the plurality of projections 110 includes an inside wall 113a rising up from a bottom portion of the recess portion 113, sloping towards an outer side of the projection 110, in which the inside wall 113a slopes relative to the reference plane 7a at an angle of 50° or more and 80° or less.
   It is thereby possible to diffuse the light reaching the inside wall 113a, and thus make the pattern region 7 appear blacker.
(7) In the tire 1 as described in any one of (1) to (6), an opening area of the recess portion 113 when viewing each of the plurality of projections 110 from a normal direction of the reference plane 7a is 15% or more and 70% or less of an area of the shape of the projection 110 in the reference plane 7a.
   Even in the case of dirt and the like accumulating in the recess portion 113, it is thereby possible to easily remove the dirt and the like.
(8) A tire molding die 10 for molding the tire 1 as described in any one of (1) to (7) includes a projection forming portion that includes a plurality of recess portions that correspond to the plurality of the projections 110.

It is thereby possible to provide a tire molding die for molding a tire having favorable moldability, having higher black density than conventional, and thus can achieve enhanced contrast, and having high durability in the pattern region.

### (Modified Embodiments)

Not limiting to the embodiments described above, various modifications and changes are possible, and these are also within the scope of the present disclosure.

(Modified Embodiment 1) The embodiment was described by giving the example of the outside wall 111 being a conical surface. Not limiting thereto, for example, a sloped surface may be formed by angular surfaces such as a quadrilateral pyramid or triangular pyramid.

(Modified Embodiment 2) The embodiment was described giving the example of the recess portion 113 having a substantially V-shaped cross-sectional shape from the opening side of the recess portion 113 towards the reference plane 7a. Not limiting thereto, for example, the recess portion 113 may be a substantially U-shaped cross-sectional shape, or may be a substantially circular arc shaped cross-sectional shape.

It should be noted that, although the embodiments and modified embodiments can be used in combination where appropriate, detailed descriptions thereof are omitted. In addition, the present disclosure is not to be limited by each of the embodiments described above.

## Claims

1. A tire (1) comprising:
a pattern region (7) provided to at least part of an outer surface (3a) of a sidewall (3) in a visually recognizable state as a different site than a surrounding of said part, wherein
the pattern region (7) includes a plurality of projections (110) that project from a reference plane (7a),
each of the plurality of projections (110) includes, in a cross-sectional shape,
an outside wall (111) that rises up from the reference plane (7a) sloping towards an inner side of the projection (110);
an apex portion (112) of the projection (110); and
a recess portion (113) that indents from the apex portion (112) towards a side of the reference plane (7a) at a center of the projection (110),
wherein,
when a point where virtual outside wall lines (VL) that respectively extend linearly two wall surfaces of the outside wall (111) that are on both sides of the recess portion (113) interposing the recess portion (113) virtually past the apex portion (112) intersect is defined as a virtual intersection point (VP),
a height from the reference plane (7a) to the virtual intersection point (VP) is defined as H0, and
a height from the apex portion (112) to the virtual intersection point (VP) is defined as Hk,
a relationship of 0.3 ≤ (Hk/HO) ≤ 0.6 is satisfied.

2. The tire (1) according to claim 1,
wherein the apex portion (112) is positioned at a height 0.6 mm or more and 1.4 mm or less from the reference plane (7a).

3. The tire (1) according to claim 1 or 2,
wherein the outside wall (111) rises up from the reference plane (7a) at an angle of 50° or more and 80° or less.

4. The tire (1) according to claim 1 or 2,
wherein each of the plurality of projections (110) has an area-equivalent circle diameter of a shape of the projection (110) in the reference plane (7a) of 0.6 mm or more and 1.5 mm or less when viewing the projection (110) from a normal direction of the reference plane (7a).

5. The tire (1) according to claim 1 or 2,
wherein the apex portion (112) smoothly connects with at least one among the outside wall (111) and the recess portion (113).

6. The tire (1) according to claim 1 or 2,
wherein each of the plurality of projections (110) includes an inside wall (113a) rising up from a bottom portion of the recess portion (113), sloping towards an outer side of the projection (110), wherein the inside wall (113a) slopes relative to the reference plane (7a) at an angle of 50° or more and 80° or less.

7. The tire (1) according to claim 1 or 2,
wherein an opening area of the recess portion (113) when viewing each of the plurality of projections (110) from a normal direction of the reference plane (7a) is 15% or more and 70% or less of an area of the shape of the projection (110) in the reference plane (7a).

8. A tire molding die (10) for molding the tire (1) according to claim 1 or 2, the tire molding die (10) comprising a projection forming portion that includes a plurality of recess portions (113) that correspond to the plurality of the projections (110).
